# EUROPEAN PATENT SPECIFICATION

(11) **EP 2 193 890 B1**
(45) Date of publication and mention of the grant of the patent: **25.01.2017**
(21) Application number: 08170942.0
(22) Date of filing: 08.12.2008
(51) Int. Cl.: B25J 15/06, B25J 15/10, B65G 47/92, B66C 1/08

(54) **A device for picking articles**
Vorrichtung zum Aufnehmen von Gegenständen
Dispositif pour prendre des articles

(43) Date of publication of application: 09.06.2010
(73) Proprietor: Scandinavian Robotics AB, 619 33 Trosa (SE)
(72) Inventor: Andersson, Johnny, 619 32 Trosa (SE)
(74) Representative: Reyier, Ann-Mari

(56) References cited:
- WO-A-2004/098839
- DE-A1- 10 005 945
- DE-C1- 4 429 363
- GB-A- 1 384 001
- JP-A- 59 097 928
- JP-A- 60 123 289
- JP-A- 61 033 838

## Description

### FIELD OF THE INVENTION

The present invention relates to a device for picking articles including a magnetizable material, wherein the device comprises an electromagnet arranged to generate a magnetic field for attracting one of the articles during picking of the article, and a control unit configured to control a magnetizing current supplied to the electromagnet.

### PRIOR ART

In case of industrial manufacturing, articles, such as finished products, product parts, articles, semi-manufactured products, and/or tools, must often be fetched from a storage, an intermediate storage or a machine, for example when assembling the product. The manufacturing is usually facilitated if the article can be fetched automatically. In particular, the manufacture is facilitated if the articles are fetched by an industrial robot. This since industrial robots have very broad areas of application and can deliver the articles to a desired location and/or control the continued machining or use of the article. Such articles are usually at least partially manufactured in a magnetizable material, for example iron or a ferrous material.

One area in which fetching of articles is very important is when cutting thin plates into plate bands. The plates are cut by steel cutters arranged at fixed distances from each other by spacers in a cutting machine. The distances between the steel cutters determine the width of the plate bands. The steel cutters and the spacers are fetched from a number of holding members each storing one type of article.

PCT/SE2004/000659 discloses a device for picking articles including an industrial robot holding a gripping tool. The gripping tool is arranged to couple the article to the gripping tool and then to hold the component during the time the manipulator moves the component to a rigging magazine or to some other position. The gripping tool includes an electromagnet generating a magnetic field attracting the article during picking of the article. A control unit supplies a direct current (DC) to the electromagnet during picking of the article. A problem with such gripping tool is that sometimes the articles remain magnetized even after that the articles have been fetched, which magnetism may disturb subsequent processing steps. It has been noticed that sometimes there remain small areas of magnetism in the articles. Further, the remaining magnetism causes an attraction between the articles, so that it can be difficult to pick them the time they should be picked.

JP 59 097928 discloses a device for picking an article, the device comprising electromagnets which can be supplied with an alternating current for releasing the article and removing its magnetization. However, it may be difficult to separate efficiently the article from the device when the magnetization is high. Moreover, the article can fall down inadvertently during the separation.

### OBJECTS AND SUMMARY OF THE INVENTION

The object of the present invention is to provide an improved device for picking articles, which alleviates the above mentioned problem with remaining magnetism in the articles.

This object is achieved by a device as defined in claim 1.

According to the invention, the electromagnet is provided with a hole going through the centre of the electromagnet, and the device further comprises an article holder arranged to take hold of the article and to move the detached article away from the electromagnet during generation of the alternating current, and the article holder is arranged linearly movable relative the electromagnet along an axis through the hole of the electromagnet.

After the article has been picked and before the article is placed at its determined destiny, the article is demagnetized by an alternating magnetic field generated by the same electromagnet which generated the magnetic field which attracted the article during picking of the article. By an alternating magnetic field is meant a magnetic field which direction varies periodically so that the direction of the magnetic field is reversed each period. The magnetic field applied to the article for attracting it to the device causes a magnetization of the article and the thereby the article is attracted to device. When the electromagnet has been turned off, there can still be magnetism remaining in the electromagnet. When the direction of the magnetic field is reversed the article is repelled and thereby detached from the device. The reversed magnetic field also causes a demagnetizing of the article. The alternating magnetic field is generated at the same time as the article is moved away from the electromagnet. Due to the fact that the article is moved away from the electromagnet at the same time as the alternating magnetic field is generated, the strength of magnetic field over the article is successively reduced, and thereby the risk for remaining magnetism from the demagnetizing field is reduced. A further advantage with moving the article away from the electromagnet after detachment is that infection of the article with remaining magnetism from the electromagnet is avoided. The article holder takes hold of the article before start of the generation of the alternating magnetic field, to avoid the article from falling down when detaching it from the electromagnet. A further task of the article holder is to move the article away from the magnet during the demagnetizing. Thus, remaining magnetism of the articles is considerable reduced or even eliminated.

According to an embodiment of the invention, the control unit is configured to turn off the alternating current close to a zero crossing. By close to is meant slightly before, slightly after or at the zero crossing. By turning off the alternating current close to a zero crossing, it is further ensured that no magnetism is remaining in the article.

According to an embodiment of the invention, the electromagnet comprises a circular winding surrounded by a casing in the centre of which the hole is formed.

According to an embodiment of the invention, the articles are ring shaped having a centre hole, and the article holder comprises a gripping member having a variable outer diameter and a periphery adapted to fit to the centre hole of the article. This embodiment makes it easily for the article holder to take hold of ring shaped articles. Due to the fact that the outer diameter is variable, it is possible to move the gripping member with a reduced diameter into the centre hole of the article and then to increase the diameter until the periphery of the gripping member is in contact with the article and thereby to take hold of the ring shaped article.

According to an embodiment of the invention, the control unit is configured to control said alternating current so that the voltage between 10V and 300V. The voltage of the alternating current depends on the thickness of the articles to be picked. The thicker article, the higher voltage is needed.

According to an embodiment of the invention, the control unit is configured to generate a direct current to the electromagnet for attracting magnetic field having a voltage between 5-50V. The magnitude of the direct current depends on the weight of the article to be attracted. The heavier article, the higher voltage is needed.

According to an embodiment of the invention, the control unit is configured to generate said alternating current during a time period which is longer than 0,01 s and shorter than 5s. The alternating current must be generated at least during a half period of the alternating current. Preferable, the demagnetization is carried out while the article is moved between the place where it is picked and the place where it is placed. Thus, the time for demagnetizing must be short.

According to an embodiment of the invention, the control unit is configured to generate, during a first time period, an alternating current adapted to detach the article from the electromagnet and to generate, during a second time period, an alternating current adapted to demagnetize the article, and the article holder is arranged to move the article away from the electromagnet during said second time period. In a first step, the article is demagnetized until it is detached from the electromagnet, and in a second step the article is further demagnetized while it is being moved away from the electromagnet. This embodiment makes it possible to further demagnetize the article, which can be an advantage in some applications.

### BRIEF DESCRIPTION OF THE DRAWINGS

The invention is now to be explained closer by describing different embodiments of the invention with reference to the attached drawings.
Fig. 1 shows an example of a device for picking articles including a gripping tool.
Fig. 2 shows the gripping tool in an enlarged view.
Fig. 3a shows a perspective view an electromagnet arranged to generate a magnetic field for attracting an article.
Fig. 3b shows a cross-section A-A through the electromagnet shown in figure 3a.
Fig. 3c shows a cross-sectional view B-B through the electromagnet shown in figure 3b.
Figs. 4a - 4f show a sequence of steps during picking of an article and subsequent demagnetizing of the article.
Fig. 5 shows an example of control unit for controlling the picking device.
Fig. 6 shows an example of the voltage generated by the control unit during picking and demagnetizing of an article.
Fig. 7 shows another example of the voltage generated by the control unit during picking and demagnetizing of an article

### DETAILED DESCRIPTION OF PREFERRED EMBODIMENTS

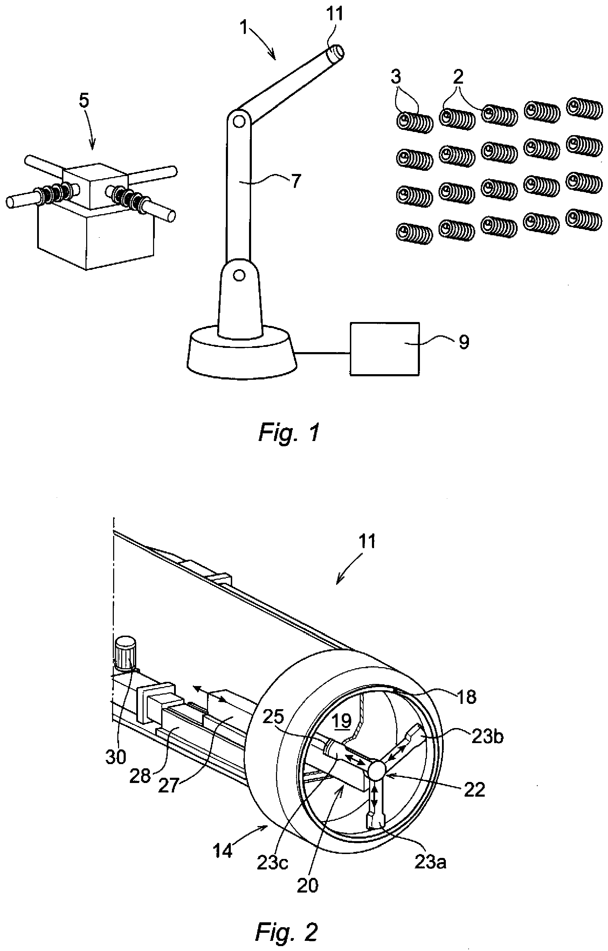

Figure 1 shows a device 1 for picking articles according to an embodiment of the invention. The figure also shows a plurality of articles 3 hung up on a plurality of hanging members 2 in a depository. Each hanging member 2 is adapted to hold a plurality of articles 3. In this example, the articles are constituted by circular plates with a centre hole in the middle of the plate and passing through the articles. For example, the articles can be cutting tools comprising steel cutters and spacers. However, the shape of the articles may of course be varied greatly. The picking device 1 is arranged to automatically pick one of the articles from the hanging member 2 and to move the picked article to a rigging magazine 5, comprising a number of elongated elements intended to receive the articles. Of cause, the picking device can be programmed to move the article to any place in the working range of the picking device.

The picking device 1 comprises a manipulator 7, such as a robot, the movements of which are controlled by a computer program. The manipulator 7 is arranged movable between a first place, in this example the depository including the hanging members 2, and a second place, in this example the rigging magazine 5. The articles are fetched by the picking device 1. The picking device further comprises a control unit 9 connected to the manipulator 7. The control unit 9 is arranged to control the movements of the manipulator based on a computer program. The picking device 1 further comprises a gripping tool 11 arranged to couple the article to the picking device and then to hold the article when the manipulator moves the article to the rigging magazine, or to some other position. The control unit 9 is also arranged to control the gripping tool. The gripping tool 11 is mounted on the outer end of the manipulator 1.

Figure 2 shows the gripping tool 11 in more detail. The gripping tool comprises an electromagnet 14 arranged to generate a magnetic field for attracting one of the articles during picking of the article. The article to be picked includes a magnetizable material, which makes it possible for the electromagnet to attract the article. The control unit 9 is configured to generate a magnetizing current supplied to the electromagnet, and thereby to control the magnetic field generated by the electromagnet. The electromagnet 14 is tubular and is provided with a hole 19 going through the centre of the electromagnet. The gripping tool is provided with a sensor 18 configured to sense when an article is in contact with the gripping tool. Accordingly, the sensor detects when an article has been attached to and detached from the electromagnet.

The gripping tool further comprises an article holder 20 arranged to take hold of an article and to move a detached article away from the electromagnet. The article holder 20 is arranged lineally movable relative the electromagnet along an axis through the centre hole 19 of the electromagnet. The article holder 20 comprises a gripping member for taking hold of the article and means for moving the article away from the electromagnet. In this embodiment the gripping member includes a chuck 22 arranged for taking hold of a ring shaped article. The chuck 22 is arranged retractable, and is opened up when an article is to be taken hold of. The chuck 22 is of the same type as a clamping chuck. When not in use, the chuck 22 of the article holder is positioned in the centre hole 19 of the electromagnet. The chuck 22 has three legs 23a - c arranged in Y-form so that the legs extend radially outward from a centre-point of the chuck. The legs 23a -c are arranged so that their lengths in a radial direction can be changed, and thereby the outer diameter of the chuck can be varied. In this embodiment, the outer diameter of the chuck, and accordingly the length of the legs can be varied ± 8 mm. The outer end 25 of each of the legs 23a - c is rounded in order to fit in the centre hole of an article, and is provided with a recess or a hollow chafer adapted to receive the article and to bear on the article. The article holder comprises an elongated beam 27 which is fixedly connected to the chuck 22 and arranged movable along a track 28 which is fixedly connected relative to the electromagnet 14. The movements of the article holder 14 are actuated by a motor 30.

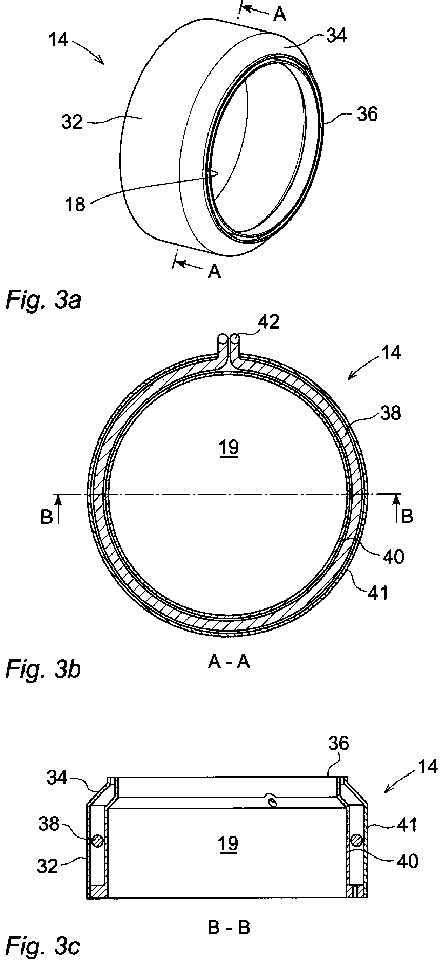

Figure 3a shows the electromagnet 14 in a perspective view, figure 3b shows the electromagnet 14 in a cross-section A-A through the electromagnet shown in figure 3a, and figure 3c shows a cross-section B-B through the electromagnet shown in figure 3b. The electromagnet comprises a first tubular part 32, which includes a circular winding 38 and a second tapering part 34 having an outer end 36 adapted to be in contact with the article when it is picked. The outer end 36 of the tapering part has a shape and size which correspond to the shape and size of the article to be picked. The winding may have one or more turns. In this example the winding has one turn. The winding is surrounding by a casing having a centre hole 19. The casing includes an inner wall 40 of a cylindrical shape and an outer wall 41 also of a cylindrical shape. The winding 38 is arranged in the space formed between the outer and inner walls of the casing. The electromagnet is arranged to attract the article and attach the article to the outer end 36 of the casing by generating a magnetic field. The distance between the outer and inner walls is reduced in the outer end 36, which is to be attached to the article. However, the outer and inner walls 41, 40 are not allowed to be in contact with each other in the end 36 in order to form a magnetic path between the walls and the article. The winding is provided with terminals 42 for connection to a cable supplying magnetizing current to the winding.

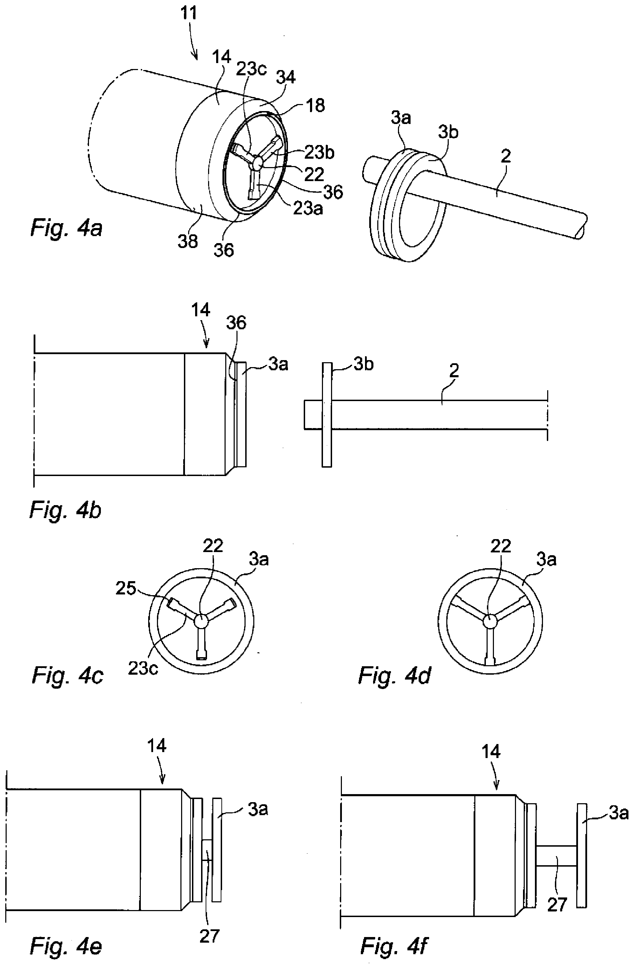

Figures 4a - 4f show the steps of picking an article by means of the picking device. In a first step, as shown in figure 4a, the picking device moves the picking tool 11 towards the article 3a to be picked. The chuck 22 is retracted, which means that the legs of the chuck 22 are in a retracted position and that the chuck is located inside the electromagnet 14. The outer end 36 of the electromagnet 14 is moved into a position opposite to and close to the article 3a to be picked. When the electromagnet is close to the article 3a, a magnetizing direct current is supplied to the electromagnet so that it generates a magnetic field attracting the article 3a. The size of the magnetic field can be varied, but the direction of the magnetic field must be the same during the attraction of the article. The magnetic field attracts the article 3a and moves the article into contact with the casing of the electromagnet. The article becomes attached to the end 36 of the electromagnet, as shown in figure 4b. The article 3a is attached to the picking tool as long as the attaching magnetic field is generated.

In a second step, as shown in figures 4c-d, the article holder takes hold of the article. When the article has been attached to the picking tool, the article is moved away from the hanging member 2. At the same time, the article holder 22 is moved so that the chuck 22 is in a position which makes it possible for the chuck to take hold of the article, i.e. the chuck is moved into the centre hole of the article 3a, as shown in figure 4c. When the chuck 22 is positioned within the centre hole of the article the chuck is opened up and the arms 23a - c are moved radially outward towards the article, until they reach an inner wall of the centre hole of the article, as shown in figure 4d. The recesses 25 of the outer ends of the arms 23a-c are fitted to the inner wall of the centre hole of the article, and in that instant the article holder has taken hold of the article.

In a third step, as shown in figures 4e-f the article is detached from the electromagnet and is demagnetized. When the article holder has taken hold of the article, the demagnetizing of the article can begin. An alternating current is supplied to the electromagnet so that it generates an alternating magnetic field which demagnetizes the article, and accordingly detaches the article from the electromagnet. When the article has been detached from the electromagnet, the article holder 22 moves the article away from the electromagnet, as shown in figure 4e. The electromagnet continues to generate an alternating magnetic field while the article holder moves the article away from the electromagnet. The article holder stops its movement when the article is about 10 - 30 mm away from the electromagnet. Then the electromagnet stops the generation of the alternating magnetic field. In order to save cycle time, the above described demagnetizing procedure is preferably carried out at the same time as the picking device moves the article to the rigging magazine 5. After the demagnetizing process there is no remaining magnetism in the article.

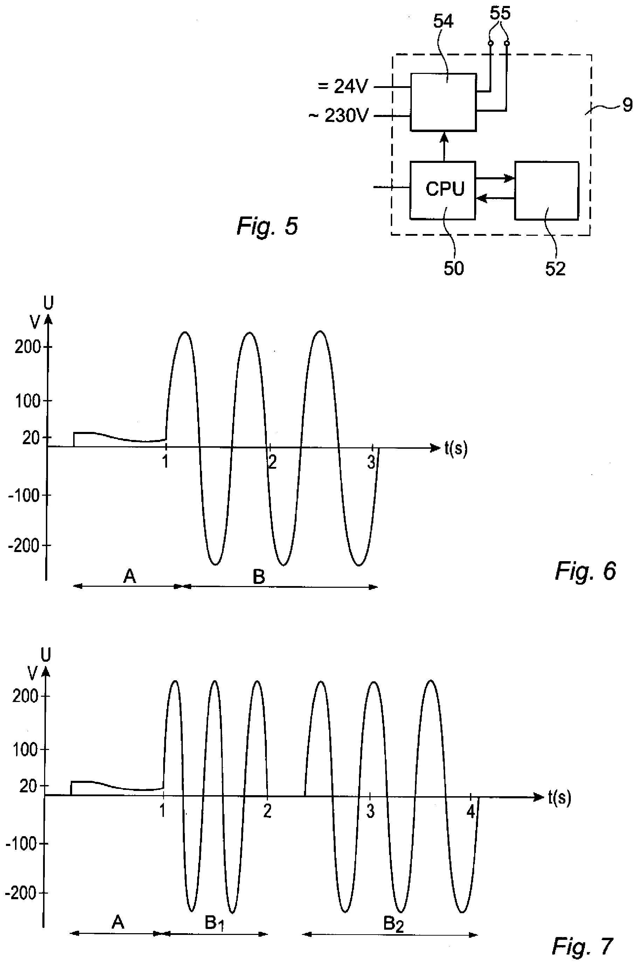

Figure 5 shows the control unit 9 in more detail. The control unit 9 is configured to control the movements of the manipulator 7 and the movements of the article holder. The control unit 9 is further configured to control the magnetizing current supplied to the electromagnet 14. The control unit 9 includes all necessary hardware and software for performing traditional robot controller functionality. The hardware includes at least one central processing unit 50, and memory storage 52 for storing a control program for controlling the movements of the manipulator, the movements of the article holder, and for controlling the magnetizing current to the electromagnet. The central processing unit 50 receives input from the sensor 18, which detects when an article has been picked. The central processing unit also receives information from other sensors, for example, sensors for detecting the position of the article before it is picked.

The control unit 9 further includes a voltage supply unit 54 configured to supply the winding of the electromagnet with a magnetizing current in dependence on instructions from the central processing unit 50. The voltage supply unit 54 is connected to two power sources; a first power source providing direct current (DC), in this example of 24V, and a second power source providing alternating current (AC), in this example of 230V. Output terminals 55 of the voltage supply unit 54 are electrically connected to the terminals 42 of the winding 38 of the electromagnet. The voltage supply unit 54 is configured to convert the direct current and the alternating current into a magnetizing current to the electromagnet in dependence on the control program run by the CPU.

Figure 6 shows an example of the voltage of a magnetizing current supplied to the winding of the electromagnet during picking of an article. The magnetic field generated by the magnetizing current is proportional to the supplied voltage. However, the absolute value of the generated magnetic field depends on the properties of the winding, such as a number of turns, the length, the thickness of the winding. During a picking phase A, which begins when the electromagnet is close to the article, a magnetizing current is supplied to the electromagnet so that it generates a magnetic field attracting the article 3a. During the picking phase A, the electromagnet is supplied with a direct current, as shown in the figure. The maximum voltage of the direct current is preferably in the range of 5 - 50V. The maximum voltage needed depends on the weight of the articles to be picked. In this example the maximum of the voltage of the direct current is 24V during the picking phase. As seen from the figure, the voltage at the beginning of the picking phase is higher than the voltage at the last part of the picking phase. The reason for this is that in the beginning of the picking phase the electromagnet and the article to be picked are positioned at a small distance from each other, and the attraction force must be higher then in order to move the article in a direction towards the electromagnet. When the article is attached to the electromagnet, the traction force can be lower in order to keep the article attached to the electromagnet.

During a demagnetizing phase B, the article is detached from the electromagnet and demagnetized. During this phase, the electromagnet is supplied with an alternating voltage (AC). The voltage of the alternating current is preferably in the range of 10-300V. The voltage needed depends on the thickness of the articles to be picked. In this example the alternating current is 230V. In order to avoid remaining magnetism in the article after the demagnetizing phase the alternating current should be turned off close to a zero crossing of the current, as shown in the figure. The time period of the demagnetizing phase B should be longer than 0,01 s and preferably shorter than 5s. The alternating current should be generated for at least a half period, but preferably more than one period. The article holder takes hold of the article in the end of the gripping phase A, and starts moving the article away from the electromagnet as soon as the article has been detached from the electromagnet, and continues to move the article away from the electromagnet during the phase B. The article is moved away from the electromagnet until the magnetic field from the magnet has been significantly reduced, and there is no longer any risk that the magnetic field will leave any remaining magnetism in the article. The distance the article is moved depends on the size of the magnetic field, but is typically about 10-30mm. When the article has been moved away from the magnetic field, the generation of the magnetic field is stopped.

Figure 7 shows another example of the voltage of the magnetizing current supplied to the electromagnet. This example differs from the example shown in figure 6, in that the demagnetizing phase B is divided into two time periods B₁ and B₂. During a first time period B₁, an alternating current is supplied to the electromagnet in order to detach the article from the electromagnet. In order to avoid remaining magnetism in the article, the alternating current should be turned off close to a zero crossing of the current. The article holder takes hold of the article, but does not move the article away from the electromagnet during the first time period. During a second time period B₂, an alternating current is supplied to the electromagnet at the same time as the article is moved away from the electromagnet in order to demagnetize the article. The article holder takes hold of the article in the end of the gripping phase A. In this embodiment the article holder moves the article during the second time period B₂. The first and second time periods last for about 1 second.

The present invention is not limited to the embodiments disclosed but may be varied and modified within the scope of the following claims. For example, the article holder can be shaped in many different ways having the same function as described above.

## Claims

1. A device (1) for picking articles (3) including a magnetizable material, wherein the device comprises an electromagnet (14) arranged to generate a magnetic field for attracting one of the articles (3a) during picking of the article, and a control unit (9) configured to control a magnetizing current supplied to the electromagnet, and to generate an alternating current to the electromagnet so that the electromagnet generates a variable magnetic field adapted to demagnetize and detach the article from the electromagnet, **characterized in that** the electromagnet is provided with a hole (19) going through the centre of the electromagnet, and the device comprises an article holder (20) arranged to take hold of the article and to move the detached article away from the electromagnet during generation of the alternating current, and the article holder is arranged linearly movable relative the electromagnet along an axis through the hole of the electromagnet.

2. The device according to claim 1, wherein the control unit (9) is configured to turn off the alternating current close to a zero crossing.

3. The device according to any of the previous claims, wherein the electromagnet (14) comprises a circular winding (38) surrounded by casing (40,41) in the center of which the hole (19) is formed.

4. The device according to any of the previous claims, wherein the articles are ring shaped and have a centre hole, and the article holder (20) comprises a gripping member (22) having a variable outer diameter and a periphery adapted to fit to the centre hole of the article.

5. The device according to any of the previous claims, wherein the control unit (9) is configured to control said alternating current so that the voltage is larger than 10V and less than 300V.

6. The device according to any of the previous claims, wherein the control unit (9) is configured to generate a direct current to the electromagnet for attracting magnetic field having a voltage between 5-50V.

7. The device according to any of the previous claims, wherein the control unit (9) is configured to generate said alternating current during a time period which is longer than 0,01s and shorter than 5s.

8. The device according to any of the previous claims, wherein the control unit (9) is configured to generate, during a first time period (B₁), an alternating current adapted to detach the article from the electromagnet and to generate, during a second time period (B₁), an alternating current adapted to demagnetize the article, and the article holder is arranged to move the article away from the electromagnet during said second time period.

## Patentansprüche

1. Vorrichtung (1) zum Aufnehmen von Gegenständen (3), beinhaltend ein magnetisierbares Material, wobei die Vorrichtung einen Elektromagneten (14) umfasst, der zur Erzeugung eines Magnetfelds angeordnet ist, das während des Aufnehmens des Gegenstands einen der Gegenstände (3a) anzieht, und eine Steuereinheit (9), die dazu ausgebildet ist, einen Magnetisierungsstrom zu steuern, der dem Elektromagneten zugeführt wird, und um dem Elektromagneten einen Wechselstrom zu erzeugen, damit der Elektromagnet ein variables Magnetfeld erzeugt, das dazu angepasst ist, den Gegenstand zu entmagnetisieren und von dem Elektromagneten zu lösen, **dadurch gekennzeichnet, dass** der Elektromagnet eine Bohrung (19) aufweist, die durch das Zentrum des Elektromagneten hindurch geht, und dass die Vorrichtung einen Halter (20) für den Gegenstand umfasst, der dazu angeordnet ist, den Gegenstand zu ergreifen und den abgelösten Gegenstand während der Erzeugung des Wechselstroms von dem Elektromagneten weg zu bewegen, und dass der Halter für den Gegenstand, relativ zu dem Elektromagnet entlang einer Achse durch die Bohrung des Elektromagneten linear bewegbar angeordnet ist.

2. Vorrichtung nach Anspruch 1, wobei die Steuereinheit (9) dazu ausgebildet ist, den Wechselstrom in der Nähe eines Nulldurchgangs auszuschalten.

3. Vorrichtung nach einem der vorhergehenden Ansprüche, wobei der Elektromagnet (14) eine zirkulare Windung (38) umfasst, die von einem Gehäuse (40, 41) umgeben ist, in dessen Zentrum die Bohrung (19) gebildet ist.

4. Vorrichtung nach einem der vorhergehenden Ansprüche, wobei die Gegenstände ringförmig sind und eine zentrale Bohrung aufweisen, und wobei der Halter (20) für den Gegenstand ein Greifelement (22) umfasst, das einen variablen Außendurchmesser und einen Umfang aufweist, die dazu ausgebildet sind, an die zentrale Bohrung des Gegenstands zu passen.

5. Vorrichtung nach einem der vorhergehenden Ansprüche, wobei die Steuereinheit (9) dazu ausgebildet ist, den Wechselstrom so zu steuern, dass die Spannung größer als 10V und kleiner als 300V ist.

6. Vorrichtung nach einem der vorhergehenden Ansprüche, wobei die Steuereinheit (9) dazu ausgebildet ist, dem Elektromagneten einen Gleichstrom bereitzustellen, um ein Magnetfeld zu bilden, das eine Spannung zwischen 5 und 50 V aufweist.

7. Vorrichtung nach einem der vorhergehenden Ansprüche, wobei die Steuereinheit (9) dazu ausgebildet ist, den Wechselstrom während eines Zeitabschnitts zu erzeugen, der länger ist als 0,01 s und kürzer ist als 5s.

8. Vorrichtung nach einem der vorhergehenden Ansprüche, wobei die Steuereinheit (9) dazu ausgebildet ist, während eines ersten Zeitabschnitts (B₁) einen Wechselstrom zu erzeugen, der dazu angepasst ist, den Gegenstand von dem Elektromagneten zu lösen und während eines zweiten Zeitabschnitts (B₁) einen Wechselstrom zu erzeugen, der dazu angepasst ist, den Gegenstand zu entmagnetisieren, und wobei der Halter für den Gegenstand dazu angeordnet ist, während des zweiten Zeitabschnitts den Gegenstand von dem Elektromagneten weg zu bewegen.

## Revendications

1. Dispositif (1) pour prendre des articles (3) comportant un matériau magnétisable, ledit dispositif comprenant un électro-aimant (14) conçu pour générer un champ électromagnétique qui attire un des articles (3a) pour le prendre, et une unité de commande (9) configurée pour commander un courant d'aimantation fourni à l'électro-aimant et pour générer un courant alternatif pour l'électro-aimant de manière que l'électro-aimant génère un champ magnétique variable permettant de désaimanter et de détacher l'article de l'électro-aimant, **caractérisé en ce que** l'électro-aimant possède un trou (19) en son centre et le dispositif comprend un porte-article (20) conçu pour tenir l'article et pour éloigner l'article détaché de l'électro-aimant lorsque le courant alternatif est généré, et **en ce que** le porte-article est disposé de manière à pouvoir se déplacer linéairement par rapport à l'électro-aimant et selon un axe traversant le trou de l'électro-aimant.

2. Dispositif selon la revendication 1, dans lequel l'unité de commande (9) est configurée pour arrêter le courant alternatif au voisinage d'un passage par zéro.

3. Dispositif selon l'une quelconque des revendications précédentes, dans lequel l'électro-aimant (14) comprend un enroulement circulaire (38) entouré d'un boîtier (40, 41) au centre duquel le trou (19) est formé.

4. Dispositif selon l'une quelconque des revendications précédentes, dans lequel les articles sont en forme de bague et comportent un trou central, le porte-article (20) comportant un élément saisisseur (22) de diamètre extérieur variable et dont la périphérie est adaptée au trou central de l'article.

5. Dispositif selon l'une quelconque des revendications précédentes, dans lequel l'unité de commande (9) est configurée pour commander ledit courant alternatif de manière que la tension soit supérieure à 10 V et inférieure à 300 V.

6. Dispositif selon l'une quelconque des revendications précédentes, dans lequel l'unité de commande (9) est configurée pour générer un courant continu d'une tension comprise entre 5 V et 50 V pour l'électro-aimant et le champ électromagnétique attractif.

7. Dispositif selon l'une quelconque des revendications précédentes, dans lequel l'unité de commande (9) est configurée pour générer ledit courant alternatif pendant une durée supérieure à 0,01 s et inférieure à 5 s.

8. Dispositif selon l'une quelconque des revendications précédentes, dans lequel l'unité de commande (9) est configurée pour générer, pendant une première durée (B₁), un courant alternatif permettant de détacher l'article de l'électro-aimant, et pendant une seconde durée (B₂), un courant alternatif permettant de désaimanter l'article, le porte-article étant conçu pour éloigner l'article de l'électro-aimant pendant ladite seconde période.
